# EUROPÄISCHE PATENTSCHRIFT

(11) **EP 3 472 006 B1**
(45) Veröffentlichungstag und Bekanntmachung des Hinweises auf die Patenterteilung: **15.04.2020**
(21) Anmeldenummer: 17730767.5
(22) Anmeldetag: 14.06.2017
(51) Int. Cl.: B60T 1/06

(54) **PARKBREMSE UND BETRIEBSVERFAHREN**
PARKING BRAKE AND METHOD OF OPERATION
FREIN DE STATIONNEMENT ET METHODE DE FONCTIONNEMENT

(30) Priorität: 16.06.2016 DE 102016210757
(43) Veröffentlichungstag der Anmeldung: 24.04.2019
(73) Patentinhaber: Valeo Siemens eAutomotive Germany GmbH, 91056 Erlangen (DE)
(72) Erfinder: KIRCHNER, Eckhard, 91056 Erlangen (DE)
(74) Vertreter: Dr. Gassner & Partner mbB
(86) Internationale Anmeldenummer: PCT/EP2017/064556
(87) Internationale Veröffentlichungsnummer: WO 2017/216230

(56) Entgegenhaltungen:
- EP-A1- 2 930 078
- WO-A1-2015/098969
- DE-A1-102012 205 576
- FR-A1- 2 934 341
- FR-A1- 2 964 925
- US-A- 3 929 384

## Beschreibung

Die Erfindung betrifft eine Parkbremse für ein Kraftfahrzeug nach dem Oberbegriff des Anspruchs 1. Daneben betrifft die Erfindung ein Verfahren zu deren Betrieb, ein Programm zur Umsetzung des Verfahrens und eine geeignete Steuereinheit für eine entsprechende Parkbremse.

FR 2 934 341 A1 offenbart ein Blockiersystem einer Abtriebswelle eines Kraftfahrzeugs. Das Blockiersystem umfasst ein Zahnrad, das koaxial auf der Welle montiert ist, und einen ersten Finger, der zwischen einer Freigabestellung der Welle und einer Blockierstellung der Welle beweglich ist, in welcher der erste Finger in einen zwischen zwei Zähnen des Rads geformten Raum eingerückt wird. Das System umfasst Ausrichtungseinrichtungen, die einen Raum zwischen zwei Zähnen des Rads mit dem ersten beweglichen Finger fluchtend ausrichten. Ein Schieber kann eine Translationsbewegung ausführen. Der erste Finger kann eine Drehbewegung um eine Drehachse ausführen und weist eine erste, eine Nocke bildende Fläche auf, auf die der Schieber drücken kann. Ein zweiter Finger kann eine Drehbewegung um die Drehachse ausführen und weist eine zweite eine Nocke bildende Fläche auf.

Weitere Parkbremsen sind aus FR 2 964 925 A1, EP 2 930 078 A1 und WO 2015/098969 A1 bekannt.

Aus der DE 10 2015 218 411 B3 ist eine Parksperre bekannt, die ein Parkbremsenrad und eine zugehörige Betätigungsklinke umfasst. Zum Betätigen der Parksperre ist die Betätigungsklinke mittels eines ersten oder zweiten Betätigungsmittels bewegbar. Das erste und zweite Betätigungsmittel sind dabei im Wesentlichen kegelförmige Körper die entlang einer Spindelachse beweglich sind. Beim Bewegen der Betätigungsmittele wird deren Stromaufnahme gemessen und hieraus die Lage der Betätigungsmittele und der Betätigungsklinke ermittelt.

Die Druckschrift US 6,338,288 B1 offenbart eine Bremse für Schienenfahrzeuge, die einen drehbaren Körper aufweist, an dem ein Bremshebel angebracht ist. Der drehbare Körper weist Ausnehmungen auf, die dazu ausgebildet sind, eine Klinke aufzunehmen, so dass der drehbare Körper in einer entsprechenden Position gehalten wird. Die Klinke ist mittels eines Schlüssels betätigbar. Ferner weist die Klinke eine Ausnehmung auf, in die in einer geöffneten oder geschlossenen Stellung der Bremse eine federvorgespannte Kugel oder einen federvorgespannten Stößel eingreift. Hierdurch wird Lage der Klinke in der entsprechenden Stellung gegen Einwirkungen wie Vibration stabilisiert.

In der Kraftfahrzeugtechnik besteht Bedarf an Parkbremssystemen, die bei einfacher Bedienung in jeder Fahr- bzw. Parksituation zuverlässig betätigbar sind und mit geringem Aufwand herstellbar sind. Darüber hinaus wird eine Anbindung mechanischer Systeme an die Kraftfahrzeugelektronik angestrebt, so dass stets eine Information über den Betriebs- und/oder Betätigungszustand eines mechanischen Systems wie einer Parkbremse vorliegt. Auch hierfür wird eine technisch einfache und wirtschaftliche Umsetzung gewünscht. Der Erfindung liegt die Aufgabe zugrunde, eine verbesserte Parkbremse bereitzustellen, die sicher betätigbar ist, eine reduzierte Bauteilanzahl aufweist und kosteneffizient herstellbar ist.

Die skizzierte Aufgabenstellung wird erfindungsgemäß durch eine Parkbremse gemäß Anspruch 1 gelöst. Die Parkbremse ist für ein Kraftfahrzeug, insbesondere ein Straßenfahrzeug, ausgelegt und umfasst ein Parkbremsenrad, das drehmomentübertragend mit einem Rad des Kraftfahrzeugs verbunden ist. Die Parkbremse weist auch ein Arretierungsmittel, beispielsweise eine Klinke, auf, die dazu ausgebildet ist, in das Parkbremsenrad zu greifen bzw. einzurasten. Das Arretierungsmittel ist schwenkbar ausgebildet und übt mit einem Klinkenzahn in einer Halteposition eine Haltekraft auf das Parkbremsenrad aus. Das Arretierungsmittel wird mittels eines ersten Betätigungsmittels zwischen der Halteposition und einer Ruheposition bewegt und ist selbst axial ausgebildet. Erfindungsgemäß ist das erste Betätigungsmittel als Federstößel ausgebildet, der entlang seiner Längsachse elastisch größenveränderlich ist. Durch die Federelastizität des Federstößels wird auch bei einer diskontinuierlichen oder rapid ansteigenden Axialkraft auf den Federstößel eine kontinuierliche Kraftübertragung auf das Arretierungsmittel erreicht. Der Federstößel verwirklicht in der erfindungsgemäßen Lösung das Prinzip eines translatorisch wirkenden Energiespeichers.

Wenn beim Andrücken des Arretierungsmittels an das Parkbremsenrad eine Oppositionsstellung vorliegt, in der sich ein Zahn des Parkbremsenrads und ein Zahn des Betätigungsmittels gegenüberliegen, nimmt das erste Betätigungsmittel eine ansteigende Axialkraft in Form einer Federkompression auf. Wenn sich das Kraftfahrzeug anschließend weiterbewegt, beispielsweise losrollt, dreht sich das Parkbremsenrad weiter bis sich eine Lückenstellung zwischen dem Arretierungsmittel und dem Parkbremsenrad einstellt. In einer Lückenstellung stehen sich die Verzahnung des Parkbremsenrads und des Arretierungsmittels derart gegenüber, das ein gegenseitiges Eingreifen möglich ist. Beim Eintreten der Lückenstellung wird das erste Betätigungsmittel durch die Rückstellkraft im Federstößel verlängert, so dass das Arretierungsmittel in die Verzahnung des Parkbremsenrads eingerastet wird. Infolgedessen ist ein zuverlässiges Verriegeln der Parkbremse unabhängig von der Winkellage des Parkbremsenrads möglich.

Die erfindungsgemäße Parkbremse erlaubt es, bei deren Betätigung die Axialkraft auf das erste Betätigungsmittel ohne Berücksichtigung weiterer Bedingungen aufzubringen. Eine Sensorik, mit der die Winkellage des Parkbremsenrads festzustellen ist, ist somit entbehrlich. Auch auf eine Informationsrückführung an eine Steuereinheit eines Antriebsmittel, mit dem die Axialkraft auf das erste Betätigungsmittel aufgebracht wird, kann verzichtet werden. Gleichzeitig wird ein hohes Maß an Sicherheit gewährleistet. Die Parkbremse weist insgesamt eine reduzierte Anzahl an Bauteilen auf und ist deshalb auch einfach und wirtschaftlich herstellbar.

In einer bevorzugten Ausführungsform der erfindungsgemäßen Parkbremse wird das erste Betätigungsmittel durch ein Exzenterelement axial bewegt. Das Exzenterelement ist auf einer dem Arretierungsmittel abgewandten Seite des ersten Betätigungsmittels angeordnet und drückt mit seiner Randkontur auf das erste Betätigungsmittel. Exzenterelemente sind mit beliebiger Randkontur herstellbar und bieten durch eine entsprechend ausgebildete Randkontur eine wählbare Kraft-Weg-Charakteristik bei der axialen Bewegung des ersten Betätigungsmittels. Beispielsweise ist ein linearer, progressiver oder degressiver Kraftanstieg in Axialrichtung bezogen auf die Winkellage des Exzenterelements einstellbar. Hierdurch beispielsweise die Geschwindigkeit der Parkbremsenbetätigung wählbar, wobei eine langsame Parkbremsenbetätigung eine Reduzierung der Betätigungsgeräusche erlaubt. Die erfindungsgemäße Parkbremse ist folglich durch eine entsprechende Wahl der Randkontur des Exzenterelements in einfacher Weise an unterschiedliche Anforderungen wie Betätigungsgeschwindigkeit oder Benutzerkomfort anpassbar. Die Erfindung bietet bei der Formgebung des Exzenterelements einen erhöhten Grad an konstruktiver Freiheit. Dies erlaubt es, das Exzenterelement mit einer Vielzahl an Fertigungsverfahren herzustellen, beispielsweise Sintern, Stanzen, oder Unrundschleifen.

Des Weiteren ist das Exzenterelement erfindungsgemäß in nur eine Richtung, insbesondere einer bestimmungsgemäßen Drehrichtung, drehbar ausgebildet. Hierdurch besteht zwischen dem ersten Betätigungsmittel und dem Exzenterelement während des Betriebs ein umlaufender Kontakt an der Randkontur des Exzenterelements. Das Exzenterelement weist vorzugsweise eine stetige, also sprungfreie, Randkontur auf. Wenn sich das Exzenterelement in einer Position befindet, in der das erste Betätigungsmittel in das Parkbremsenrad eingerastet ist, ist eine entriegelte Position des ersten Betätigungsmittels durch ein Weiterdrehen des Exzenterelements herstellbar. Das Exzenterelement kann hierzu mit einem Freilauf versehen sein, der ein Drehen entgegen der bestimmungsgemäßen Drehrichtung des Exzenterelements blockiert. Ferner kann der Freilauf formschlüssig oder reibschlüssig ausgebildet sein. Alternativ oder zusätzlich kann die Ansteuerung eines Antriebsmittels für das Exzenterelement, beispielsweise ein Elektromotor, dazu ausgebildet sein, dass lediglich eine Drehung des Exzenterelements in eine einzige Richtung möglich ist. Das Verriegeln und Entriegeln der Parkbremse ist erfindungsgemäß durch eine einzige Bewegung, nämlich das Drehen des Exzenterelements möglich. Dadurch können in der beanspruchten Parkbremse keine unterschiedlichen Betätigungskräfte gleichzeitig auftreten, die zu Beschädigungen der Parkbremse führen. Einem unbeabsichtigten Öffnen der Parkbremse durch ein Drehen entgegen der bestimmungsgemäßen einzigen Drehrichtung und einem daraus resultierenden Freigeben des Verriegelungselements wird so entgegengewirkt. Ferner kann ein Antriebsmittel, mit dem das Exzenterelement gedreht wird, beispielsweise ein Elektromotor, in puncto Ansteuerung vereinfacht werden. Insgesamt wird dadurch die Zuverlässigkeit, Wartungsfreundlichkeit und Wirtschaftlichkeit der Parkbremse weiter gesteigert.

In der erfindungsgemäßen Parkbremse kann das erste Betätigungsmittel auch mit einem Dämpfer, insbesondere einem viskosen oder viskos-elastischen Dämpfer, versehen sein. Besonders bevorzugt ist der Dämpfer im ersten Betätigungsmittel selbst angeordnet. Der Dämpfer vermeidet im Betrieb der Parkbremse schnelle Bewegungen des ersten Betätigungsmittels und/oder Arretierungsmittels, die zu einem Anschlagen dieser führen können. Hierdurch wird beispielsweise beim Entriegeln der Parkbremse einer Geräuschentwicklung entgegengewirkt. Je höher der Dämpfungsfaktor des Dämpfers gewählt wird, umso stärker wird die Geräuschentwicklung vermieden. Je niedriger der Dämpfungsfaktor gewählt ist, umso schneller erfolgt die Betätigung der Parkbremse. Dadurch ist die erfindungsgemäße Parkbremse bezüglich Benutzerkomfort und Betätigungsgeschwindigkeit einstellbar. Alternativ kann das erste Betätigungselement zumindest teilweise aus einem Werkstoff hergestellt sein, der eine ausreichende innere Dämpfung bietet. Infolgedessen sind zumindest eine Komponente des ersten Betätigungselements und der Dämpfer einteilig ausgebildet, was ein erhöhtes Maß an funktioneller Integration bzw. Funktionsverdichtung bietet. Gleichermaßen kann auch mindestens ein Lager, beispielsweise ein Drehlager, Gleit- oder Wälzlager, in der erfindungsgemäßen Parkbremse zumindest teilweise aus einem Werkstoff mit einer ausreichend hohen inneren Dämpfung ausgebildet sein, so dass die Wirkung des Dämpfers weiter gesteigert wird. Bei einem derartigen Lager wird im Sinne des Leichtbaus eine weitere Funktionsverdichtung erzielt.

Bei der beanspruchten Parkbremse kann das erste Betätigungsmittel an dem Ende, das dem Exzenterelement zugewandt ist, eine Abrundung aufweisen oder mit einem Gleit- oder Wälzlager versehen sein. Durch die Abrundung bzw. das Gleit- oder Wälzlager wird die Kontaktfläche zwischen der Randkontur des Exzenterelements und dem ersten Betätigungsmittel dahingehend beeinflusst, dass Kontaktpressungen reduziert werden. Zusätzlich wird die vorliegende Reibung zwischen dem ersten Betätigungsmittel und dem Exzenterelement verringert. Hieraus resultiert ein verringerter Abrieb an der Kontaktfläche, wodurch Beschädigungen am Exzenterelement und/oder dem ersten Betätigungsmittel vorgebeugt wird. Gleichermaßen werden die erforderlichen Betätigungskräfte reduziert, so dass das Exzenterelement auch mit einem Antriebsmittel mit verringerter Antriebsleistung betreibbar ist. Unter einem Gleit- oder Wälzlager im Sinne der erfindungsgemäßen Parkbremse ist ein Maschinenelement zu verstehen, das einen rollenden Kontakt zwischen dem ersten Betätigungsmittel und dem Exzenterelement gewährleistet, beispielsweise eine Rolle. Alternativ wird durch ein flächig ausgebildetes Gleitlagerelement ein Mischreibungszustand erreicht, in dem die Reibungskräfte an der Kontaktfläche verringert sind. Ferner wird durch eine Abrundung oder ein Gleit- oder Wälzlager eine Selbsthemmung zwischen dem ersten Betätigungsmittel und dem Exzenterelement vermieden. Betriebszuständen, in denen eine Betätigung der Parkbremse unmöglich ist, wird somit vorgebeugt und ein erhöhtes Maß an Zuverlässigkeit gewährleistet.

In einer bevorzugten Ausführungsform weist der Federstößel ein erstes Stößelement auf, in dem mindestens ein zweites Stößelelement axial beweglich aufgenommen ist. Das erste Stößelelement ist ein Außenteil und vorzugsweise als Hülse ausgebildet und das zweite Stößelement ist ein Innenteil, das vorzugsweise als Stift ausgebildet ist. Ferner ist im ersten Stößelelement ein Federelement angeordnet, das bei einer Bewegung des zweiten Stößelelements auf dieses eine Rückstellkraft ausübt. Das Federelement wirkt in Axialrichtung, so dass das zweite Stößelelement elastisch gelagert ist. Vorzugsweise ist im ersten Stößelelement ein weiteres axial bewegliches Stößelelement aufgenommen, das mit dem Federelement in der Hülse zusammenwirkt. Ein solcher Federstößel mit zwei Stiften verwirklicht das technische Prinzip eines Federstegs und bildet einen translatorisch wirkenden Energiespeicher. Die Stifte des Federstößels können jeweils massiv oder hohl ausgebildet sein. Federstößel sind kosteneffizient und in einfacher Weise in einer weiten Spanne an Maßen und Federstärken herstellbar. Infolgedessen ist die Kinematik der erfindungsgemäßen Parkbremse durch die Wahl eines entsprechend dimensionierten Federstößels einstellbar. Beispielsweise ist die Kraft, die vom Arretierungsmittel in einer Oppositionsstellung auf das Parkbremsenrad ausgeübt wird, durch die Dimensionierung des Federstößels wählbar. Hierdurch wird bestimmt, mit welcher Geschwindigkeit das Arretierungsmittel beim Erreichen der Lückenstellung in das Parkbremsenrad eingreift und wie intensiv das dabei auftretende Geräusch ist. Ferner sind Federstößel auch bei einer hohen Anzahl an Betätigungszyklen robust gegen Materialermüdung. Die beanspruchte Parkbremse weist folglich eine hohe Lebensdauer auf.

In einer weiteren bevorzugten Ausführungsform der Erfindung ist die Parkbremse mit einer Messvorrichtung ausgestattet, die mit dem Antriebsmittel verbunden ist, das das Exzenterelement bewegt. Die Messvorrichtung ist dazu ausgebildet, die Stromaufnahme des Antriebsmittels zu erfassen. Aufgrund der mechanischen Kopplung zwischen dem Arretierungsmittel, dem ersten Betätigungsmittel und dem Exzenterelement bildet die Stromaufnahme des Antriebsmittels die vorliegenden Kräfte bzw. den mechanischen Beanspruchungszustand der Parkbremse ab. Beispielsweise führt eine Druckbeanspruchung des ersten Betätigungsmittels zu einer erhöhten Andrückkraft, und damit Reibung zwischen dem Exzenterelement und dem ersten Betätigungsmittel, was wiederum eine erhöhte Antriebsleistung für das Exzenterelement erfordert. Mittels der Messvorrichtung ist die erfindungsgemäße Parkbremse bereits anhand einer einzelnen, leicht erfassbaren physikalischen Größe zu einer Erkennung des eigenen Betriebszustands geeignet. Die beanspruchte Parkbremse trägt damit zur Verbesserung einer Kraftfahrzeugelektronik mit umfangreichen Diagnosefunktionen für ein Kraftfahrzeug bei.

Weiter bevorzugt kann die Parkbremse mit mindestens einem Schalter ausgestattet sein, mit denen das Erreichen einer wählbaren Winkelstellung des Exzenterelements erfassbar ist. Der mindestens eine Schalter ist vorzugsweise dazu ausgebildet, beim Erreichen der ausgewählten Winkelstellung ein impulsartiges Signal zu senden. Hierdurch kann zum Beispiel das Erreichen einer festgelegten Ruheposition oder Halteposition der Parkbremse erkannt und an die Kraftfahrzeugelektronik übermittelt werden. Auch hierdurch wird die Diagnosefunktionalität einer entsprechenden Kraftfahrzeugelektronik verbessert.

Ferner kann die erfindungsgemäße Parkbremse mit einem zweiten axial beweglichen Betätigungsmittel versehen sein, das im Bereich des Exzenterelements angeordnet ist. Das zweite axiale bewegliche Betätigungsmittel ist dazu ausgebildet, in eine Verzahnung einzugreifen, die am Exzenterelement ausgebildet ist. Bei einem Eingreifen des zweiten Betätigungsmittels in die Verzahnung wird ein Drehmoment auf das Exzenterelement ausgeübt und dieses in Drehung versetzt. Das zweite Betätigungsmittel ist derart ausgebildet, dass durch das Eingreifen in die Verzahnung das Exzenterelement um einen bestimmten Betätigungswinkel gedreht wird. Vorzugsweise ist der Betätigungswinkel derart gewählt, dass durch eine entsprechende Drehung das Exzenterelement von einer Halteposition in eine Ruheposition bewegbar ist. Hierzu beträgt entspricht der Betätigungswinkel mindestens dem Winkel zwischen der Haltposition und der Ruheposition in der Drehrichtung des Exzenterelements. Das zweite axial bewegliche Betätigungsmittel erlaubt es, das Exzenterelement unabhängig vom Antriebsmittel zu lösen. Das axial bewegliche zweite Betätigungsmittel ist vorzugsweise als linear wirkender Aktuator ausgebildet, der unmittelbar mehrmals hintereinander benutzt werden kann. Besonders bevorzugt ist das axial bewegliche zweite Betätigungsmittel als Magnetbolzen ausgebildet, der durch einen einfachen elektrischen Impuls auslösbar ist. Mit dem zweiten Betätigungsmittel ist die erfindungsgemäße Parkbremse redundant lösbar. Ferner kann das zweite Betätigungsmittel zur Unterstützung des Antriebsmittels eingesetzt werden, beispielsweise beim Auftreten von erhöhten Reibungskräften zwischen dem ersten Betätigungsmittel und dem Exzenterelement. Insgesamt wird durch das zweite axial bewegliche Betätigungsmittel die Robustheit der erfindungsgemäßen Parkbremse weiter erhöht. In einer weiteren Ausführungsform der erfindungsgemäßen Parkbremse kann das zweite Betätigungsmittel auch als hydraulischer Aktutator, beispielsweise als Hydraulikzylinder, ausgebildet sein.

Die zugrundeliegende Aufgabenstellung wird auch durch ein Betriebsverfahren gemäß Anspruch 7 gelöst. Die Parkbremse weist ein Parkbremsenrad auf, das drehmomentübertragend mit einem Rad eines Kraftfahrzeugs, insbesondere eines Straßenfahrzeugs, verbunden ist. Die Parkbremse verfügt über ein schwenkbares Arretierungsmittel, das dazu ausgebildet ist zum Verriegeln der Parkbremse in das Parkbremsenrad einzurasten. Das Arretierungsmittel wird durch ein axial bewegliches erstes Betätigungsmittel bewegt. Das erste Betätigungsmittel ist dabei als Federstößel ausgebildet. In einem ersten Verfahrensschritt wird die Parkbremse in einem geöffneten Zustand bereitgestellt, d.h. dass das Arretierungsmittel nicht in das Parkbremsenrad einrastet. In einem folgenden Verfahrensschritt wird das Arretierungsmittel durch das erste Betätigungsmittel in eine Verriegelungsrichtung, also zum Parkbremsenrad hin, bewegt. Anschließend wird durch die Kraft, die auf das erste Betätigungsmittel einwirkt, dieses zusammengedrückt, wenn zwischen dem Parkbremsenrad und dem Arretierungsmittel eine Oppositionsstellung vorliegt. Unter einer Oppositionsstellung ist zu verstehen, dass sich ein Zahn des Parkbremsenrads und ein Zahn des Betätigungsmittels gegenüberliegen. Das erste Betätigungsmittel stützt sich dabei auf einer Seite am Arretierungsmittel ab. Ein Einrasten des Arretierungsmittels in das Parkbremsenrad wird verhindert. Gleichzeitig wird im ersten Betätigungsmittel eine Federspannung aufgebaut.

In einem weiteren Verfahrensschritt stellt sich zwischen dem Parkbremsenrad und dem Arretierungsmittel eine Lückenstellung ein. Unter einer Lückenstellung ist eine relative Positionierung des Parkbremsenrads und des Arretierungsmittels zu verstehen, in der ein gegenseitiges Eingreifen möglich ist. Die Lückenstellung tritt beispielsweise dadurch ein, dass das Kraftfahrzeug bei vorliegender Oppositionsstellung weiter rollt. Infolge des verhinderten Einrastens des Arretierungsmittels liegt in der Oppositionsstellung nur eine minimale Bremswirkung vor. In einem derartigen Zustand rollt das Kraftfahrzeug auch auf einem minimal geneigten Untergrund in eine Richtung. Hierdurch wird das Parkbremsenrad weiterbewegt. Sobald die Lückenstellung vorliegt, wird das Arretierungsmittel durch die Federspannung im ersten Betätigungsmittel in das Parkbremsenrad eingerastet. Das erfindungsgemäße Verfahren gewährleistet damit, dass die Verriegelung der Parkbremse unabhängig von der ursprünglich vorliegenden Winkellage des Parkbremsenrads erfolgt. Die vorliegenden axialen Betätigungskräfte auf das erste Betätigungsmittel werden durch dessen Auslegung als Federstößel in Form von Federspannung aufgenommen. Dadurch wird eine rückwirkungsfreie Betätigungskinematik erzielt. Ferner sind Federstößel in einer breiten Spanne an Abmessungen und Federstärken kosteneffizient verfügbar. Je höher die Federstärke im Federstößel ist, umso schneller und zuverlässiger erfolgt das Einrasten in das Parkbremsenrad. Je niedriger die Federstärke im Federstößel hingegen ist, umso geräuschärmer erfolgt das Einrasten. Das erfindungsgemäße Verfahren erlaubt damit einen in einfacher Weise einen an Komfort- und Zuverlässigkeitsanforderungen anpassbaren Betrieb einer Parkbremse. Das erfindungsgemäße Betriebsverfahren erfordert lediglich das Aufbringen einer Betätigungskraft zur axialen Bewegung des ersten Betätigungsmittels und ist folglich mit einer geringen Anzahl an Bauteilen möglich.

Vorzugsweise wird im erfindungsgemäßen Verfahren das Arretierungsmittel durch die Randkontur eines Exzenterelements betätigt. Das Exzenterelement wird während des beanspruchten Verfahrens bevorzugt in nur eine Richtung gedreht. Exzenterelemente weisen eine weitestgehend frei wählbare Randkontur mit veränderlichem Radius auf, so dass die Bewegungsdynamik des ersten Betätigungsmittels konstruktiv wählbar ist. Beispielsweise ist, bezogen auf die Winkellage des Exzenterelements, ein progressiver, konstanter oder degressiver Anstieg der Auslenkung des ersten Betätigungsmittels wählbar. Die Parkbremse ist folglich in ihrem Betätigungsverhalten einfach anpassbar. Eine Drehung in eine gleichbleibende Richtung erlaubt es, die Ansteuerung des Antriebsmittels, das das Exzenterelement dreht, zu vereinfachen. Diese Reduktion der Komplexität bietet einen Zugewinn an Robustheit, Wartungsfreundlichkeit und Kosteneffizienz.

Darüber hinaus kann im erfindungsgemäßen Verfahren, ausgehend von einer vorliegenden Oppositionsstellung zwischen dem Parkbremsenrad und dem Arretierungsmittel, ein Eintritt einer Lückenstellung erkannt und erfasst werden. Dabei wird an einem Antriebsmittel, mit dem das Exzenterelement gedreht wird, die Stromaufnahme, beispielsweise mit einem Watt-Meter, erfasst. Die Stromaufnahme beim Drehen des Exzenterelements bei einem Erreichen der Oppositionsstellung im Wesentlichen durch sogenannte Systemreibung verursacht, also Reibung, die durch das erste Betätigungsmittel in Kontakt mit dem Parkbremsenrad hervorgerufen wird. Beim Eintritt der Lückenstellung entspannt sich das erste Betätigungsmittel, so dass die auf das Parkbremsenrad ausgeübte Kraft reduziert wird. Folglich wird die Reibungskraft, die der Drehung des Exzenterelements entgegen gerichtet ist, auch verringert, so dass sich die zur Bewegung des Exzenterelements erforderliche Leistung verringert. Mit dem reduzierten Leistungsbedarf geht eine verringerte Stromaufnahme einher. Im beanspruchten Betriebsverfahren ist ein Schwellenwert einstellbar, mit dem der erfasste Rückgang der Stromaufnahme verglichen wird. Übersteigt der Rückgang der Stromaufnahme den Schwellenwert betragsmäßig, wird hieran im beanspruchten Verfahren ein Übergang von der Oppositionsstellung in die Lückenstellung identifiziert. Geeignete Messvorrichtungen für die Stromaufnahme sind räumlich getrennt von den mechanischen Komponenten der Parkbremse platzierbar. Damit wird das Prinzip einer räumlichen Funktionstrennung für eine mechanische Funktion verwirklicht. Der Wegfall von Sensorik im Bereich mechanischer Komponenten vereinfacht die Ausnutzung des zur Verfügung stehenden Bauraums, was eine Platzersparnis erlaubt. Darüber hinaus kann durch die eindeutige Identifikation eines Einrastens eine Neukalibrierung der Parkbremse durchgeführt werden. Hierdurch können beispielsweise durch Abrieb und/oder Verformung am Arretierungsmittel und/oder Parkbremsenrad hervorgerufene Abweichungen in der Form dieser Komponenten ausgeglichen werden. Infolgedessen ist über die gesamte Lebensdauer der Parkbremse eine exakte Betätigung möglich. Eine Neukalibrierung ist nur bei einem Positionsverlust der Parkbremse nötig. Die erfindungsgemäße Lösung erfordert keinen persistenten, also nichtflüchtigen Speicher, in dem Kalibrierdaten abgespeichert werden. Hierdurch wird eine Einbindung der erfindungsgemäßen Parkbremse in Kraftfahrzeugelektronikfunktionen wie "Wake up" oder "Go to sleep" vereinfacht.

Die Aufgabenstellung wird auch durch ein Programm gemäß Anspruch 10 gelöst. Das Programm ist in einer Steuereinheit, die in einem Kraftfahrzeug eingesetzt wird, abspeicherbar und ausführbar. Das Programm ist dazu ausgebildet, das erfindungsgemäße Verfahren in mindestens einer der oben beschriebenen Ausführungsformen bei einer Parkbremse umzusetzen. Gleichermaßen wird die Aufgabenstellung durch eine Steuereinheit gemäß Anspruch 11 gelöst. Die erfindungsgemäße Steuereinheit verfügt über einen Speicher und eine Recheneinheit und ist damit dazu geeignet, Programme zu speichern und auszuführen. Die Steuereinheit verfügt über einen Signaleingang zum Empfang eines Betätigungsbefehls und über einen Signalausgang zur Ansteuerung eines Antriebsmittels der Parkbremse. Zusätzlich kann die Steuereinheit mit einer Messvorrichtung und/oder einem Schalter verbunden sein, die Informationen über den vorliegenden Betriebszustand der Parkbremse liefern. Die Steuereinheit ist erfindungsgemäß dazu ausgebildet, ein oben beschriebenes Programm zur Steuerung einer Parkbremse zu speichern und auszuführen und somit das erfindungsgemäße Verfahren umzusetzen. Das erfindungsgemäße Verfahren kann dadurch beispielsweise als Zusatzfunktion über ein Software-Update in eine bestehende Parkbremse implementiert werden. Die der Erfindung zugrundeliegende Aufgabenstellung wird auch von einer Steuereinheit für eine Parkbremse gelöst, die über einen Speicher und eine Recheneinheit verfügt und dazu ausgebildet ist, das oben skizzierte Programm auszuführen.

Die Erfindung wird im Folgenden anhand von Ausführungsbeispielen näher erläutert, die in den Figuren abgebildet sind. Es zeigen im Einzelnen:
- FIG 1: den Aufbau einer Ausführungsform der erfindungsgemä-ßen Parkbremse in einer Oppositionsstellung;
- FIG 2: den Aufbau der Parkbremse aus FIG. 1 in einer Lücken-stellung;
- FIG 3: eine Detailansicht einer Ausführungsform eines Exzen-terelements für die erfindungsgemäße Parkbremse;
- FIG 4: ein Winkel-Betätigungshub-Diagramm einer Ausführungs-form eines Exzenterelements für die erfindungsgemäße Parkbremse;
- FIG 5: ein Winkel-Stromaufnahme-Diagramm eines Betätigungs-vorgangs einer Ausführungsform der erfindungsgemäßen Parkbremse;
- FIG 6: eine Detailansicht einer weiteren Ausführungsform des Exzenterelements.

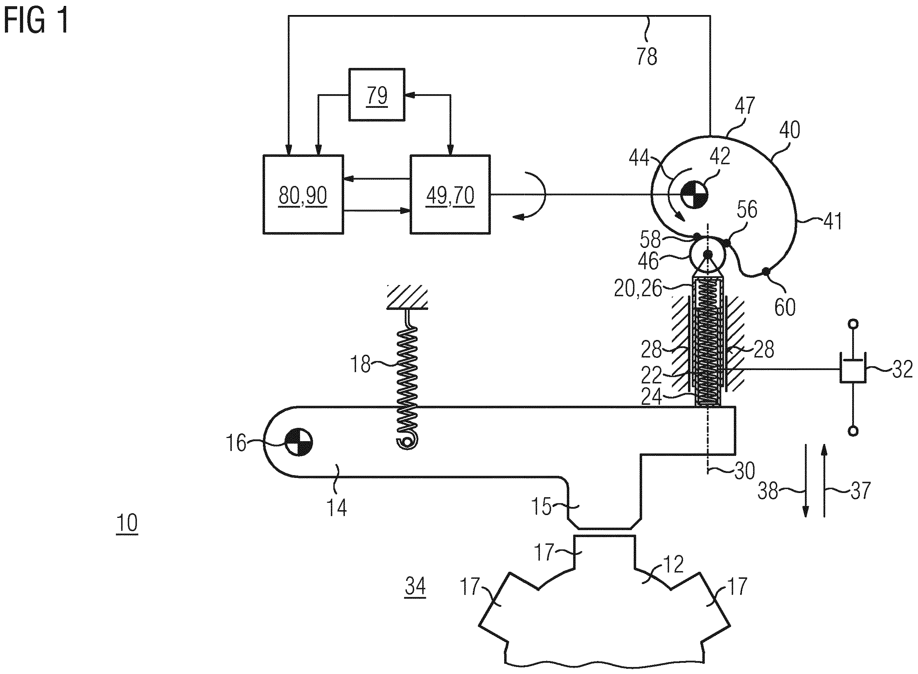

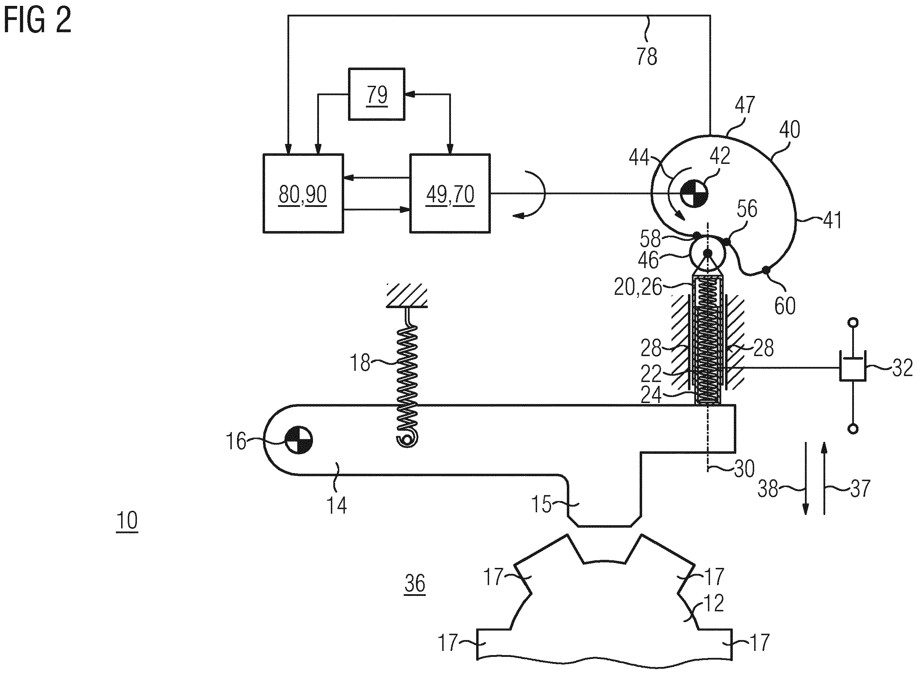

In FIG 1 und FIG 2 ist jeweils der Aufbau einer Ausführungsform der erfindungsgemäßen Parkbremse 10 abgebildet. Die Parkbremse 10 umfasst ein Arretierungselement 14, das um ein Drehlager 16 schwenkbar ist. Das Arretierungselement 14 ist im Wesentlichen als Klinke ausgebildet und verfügt über einen Klinkenzahn 15, der dazu geeignet ist, in ein gegenüber platziertes Parkbremsenrad 12 einzugreifen. Das Arretierungsmittel 14 in mit einer Öffnungsfeder 18 verbunden, die auf das Arretierungsmittel 14 eine Kraft in eine Öffnungsrichtung 27 ausübt. Durch ein erstes Betätigungsmittel 20 ist durch Andrücken auf das Arretierungsmittel 14 eine Kraft ausübbar, die in eine Schließrichtung 38 gerichtet ist. Im FIG 1 liegt zwischen dem Parkbremsenrad 12 und dem Arretierungsmittel 14 eine Oppositionsstellung 34 vor. In der Oppositionsstellung 14 liegt der Klinkenzahn 15 des Arretierungsmittels 14 einem Parkbremsenradzahn 17 gegenüber. Bei einer Bewegung des ersten Betätigungsmittels 20 in Schließrichtung 38 wird ein Eingreifen des Arretierungsmittels 14 in das Parkbremsenrad 12 verhindert, so dass keine Blockierwirkung der Parkbremse 10 vorliegt. In FIG 2 hingegen liegt eine Lückenstellung 36 vor, in der der Klinkenzahn 15 einer Lücke zwischen zwei benachbarten Parkbremsenradzähnen 17 gegenüberliegt, was ein gegenseitiges Eingreifen erlaubt.

Das erste Betätigungsmittel 20 ist entlang seiner Längsachse 30 axial beweglich in einer Führung 28 aufgenommen und drückt mit einem Ende gegen das Arretierungsmittel 14. Das erste Betätigungsmittel 20 ist als Federstößel ausgebildet und umfasst ein erstes und ein zweites Stößelelement 24, 26, die zueinander axial, also entlang der Längsachse 30, verschiebbar sind. Im ersten Betätigungsmittel 20 ist auch ein Federelement 22 aufgenommen, das sich an den beiden Stößelelementen 24, 26 abstützt. Das erste Stößelelement 24 ist dabei als Hülse ausgebildet und das zweite Stößelelement 26 als Stift. Durch das Federelement 22 ist das erste Betätigungsmittel 20 dazu geeignet, eine in Axialrichtung 30 einwirkende Kraft als Verformung, hier einer Kompression, des Federelements 22 aufzunehmen. Das Federelement 22 ist als Druckfeder ausgebildet, so dass eine Kompression zu einer Kraftausübung des ersten Betätigungsmittels 20 auf das Arretierungsmittel 14 in Schließrichtung 28 führt. Das erste Betätigungsmittel 20 ist auch mit einem viskos-elastischen Dämpfer 32 ausgestattet, der in FIG 1 symbolisch gezeigt ist. Der viskos-elastische Dämpfer 32 dient dazu, schnelle Bewegungen des ersten Betätigungsmittels 20 entlang der Axialrichtung 30 zu verzögern. Hierdurch werden wird ein Anschlagen des ersten Betätigungsmittels 20 gegen das Arretierungsmittel 14 und/oder eine Randkontur 41 eines Exzenterelements 40 bei sprungartigen Zustandsänderungen oder Betätigungen in der Parkbremse 10 vermieden. Geräuschentwicklungen im Betrieb der Parkbremse 10 wird dadurch entgegengewirkt. Ferner weist das erste Betätigungsmittel 20 an seinem dem Arretierungsmittel 14 abgewandten Ende ein Gleit- oder Wälzlager 46 auf, das sich auf der Randkontur 41 des Exzenterelements 40 abstützt.

Das Exzenterelement 40 ist an einem drehbaren Lager 42 befestigt und ist durch ein nicht näher in FIG 1 und 2 abgebildetes Antriebsmittel 49 drehbar. Das Exzenterelement 40 ist auch mit einem Freilauf 47 ausgestattet, der eine Drehung entgegen der betriebsmäßigen Drehrichtung 44 verhindert. Infolgedessen ist das Exzenterelement 40 nur in eine Richtung drehbar. In FIG 1 befindet sich die Parkbremse 10 in einem geöffneten Zustand, in dem der mechanische Kontakt zwischen dem ersten Betätigungsmittel 20 und dem Exzenterelement 40 in einer Entriegelungsposition 56 an der Randkontur 41 des Exzenterelements 40 vorliegt. Bei deiner Drehung des Exzenterelements 40 in die bestimmungsgemäße Drehrichtung 44 passiert der mechanische Kontakt an der Randkontur 41 einen Verriegelungsbeginn 58. Der Verriegelungsbeginn 58 stellt entgegen der bestimmungsgemäßen Drehrichtung 44 gesehen, die Position dar, ab der der Radius des Exzenterelements 40 ansteigt. Nach dem Passieren des Verriegelungsbeginns 58 wird das erste Betätigungsmittel 20 immer weiter in die Schließrichtung 38 der Parkbremse 10 gedrückt. Der Radius des Exzenterelements 40 erreicht im Bereich einer Verriegelungsposition 60 sein Maximum. Die Parkbremse 10, insbesondere das Antriebsmittel 49, gemäß FIG 1, 2 wird von einer Steuereinheit 90 angesteuert, in der ein entsprechendes Programm 80 ausführbar gespeichert ist. Die Steuereinheit 90 ist mit einer Messvorrichtung 79 gekoppelt, die dazu geeignet ist, die Stromaufnahme 70 des Antriebsmittels 49 zu erfassen. Die Steuereinheit 90 ist auf mit einem Schalter 78 verbunden, durch den das Erreichen einer bestimmten Winkellage des Exzenterelements 40 erfassbar ist.

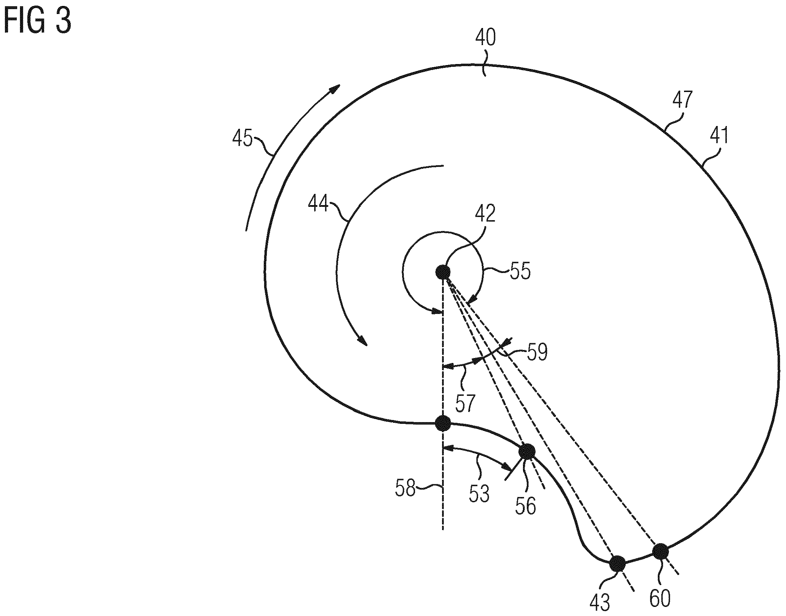

FIG 3 zeigt im Detail ein Exzenterelement 40, das in der Parkbremse 10 gemäß FIG 1 und FIG 2 einsetzbar ist. Das Exzenterelement 40 ist am drehbaren Lager 42 befestigt und wird im Betrieb nur in die bestimmungsgemäße Drehrichtung 44 gedreht. Infolgedessen bewegt sich der mechanische Kontakt mit dem nicht näher gezeigten ersten Betätigungsmittel 20 an der Randkontur 41 entlang der Kontaktumlaufrichtung 45. Zwischen der Entriegelungsposition 56 und dem Verriegelungsbeginn 58 liegt an der Randkontur ein Inaktiv-Bereich 53 vor. Wenn der mechanische Kontakt zwischen dem ersten Betätigungsmittel 20 und dem Exzenterelement 40 im Inaktiv-Bereich 53 vorliegt, wird höchstens eine geringfügige Verriegelungsbetätigung der Parkbremse 10 hervorgerufen. Der Inaktiv-Bereich 53 ist bezogen auf das drehbare Lager 42 durch den Leerlaufwinkel 57 definiert.

Daran schließt sich zwischen dem Verriegelungsbeginn 58 und der Verriegelungsposition 60 der Verriegelungswinkel 55 an. Im Bereich des Verriegelungswinkels 55 steigt der Radius der Randkontur 41, so dass das erste Betätigungsmittel 20 bei einem mechanischen Kontakt mit dem Exzenterelement 40 in diesem Bereich immer weiter in die Schließrichtung 38 gemäß FIG 1, 2 bewegt wird. Bestimmungsgemäß wird das Exzenterelement 40 zum Halten einer Verriegelung der Parkbremse 10 derart gehalten, dass der mechanische Kontakt mit dem ersten Betätigungsmittel 20 an der Verriegelungsposition 60 verbleibt.

Zwischen der Verriegelungsposition 60 und der Entriegelungsposition 56 liegt, bezogen auf das drehbare Lager 42, der Entriegelungswinkel 59. Das Maximum 43 des Radius der Randkontur 41 liegt innerhalb des Entriegelungswinkels 59. Der Radius der Randkontur 41 steigt zwischen der Verriegelungsposition 60 und dem Maximum 43 an. Hierdurch wird verhindert, dass das Exzenterelement 40 in der Verriegelungsposition 60 selbsttätig sich entlang der bestimmungsgemäßen Drehrichtung 44 weiterdreht und die Entriegelungsposition 56 erreicht wird. Eine selbsttätige Drehung entgegen der bestimmungsgemäßen Drehrichtung 44 wird durch den Freilauf 47 verhindert. Folglich ist die Verriegelung der Parkbremse 10 auch ohne zusätzliche technische Komponenten ein stabiler Zustand.

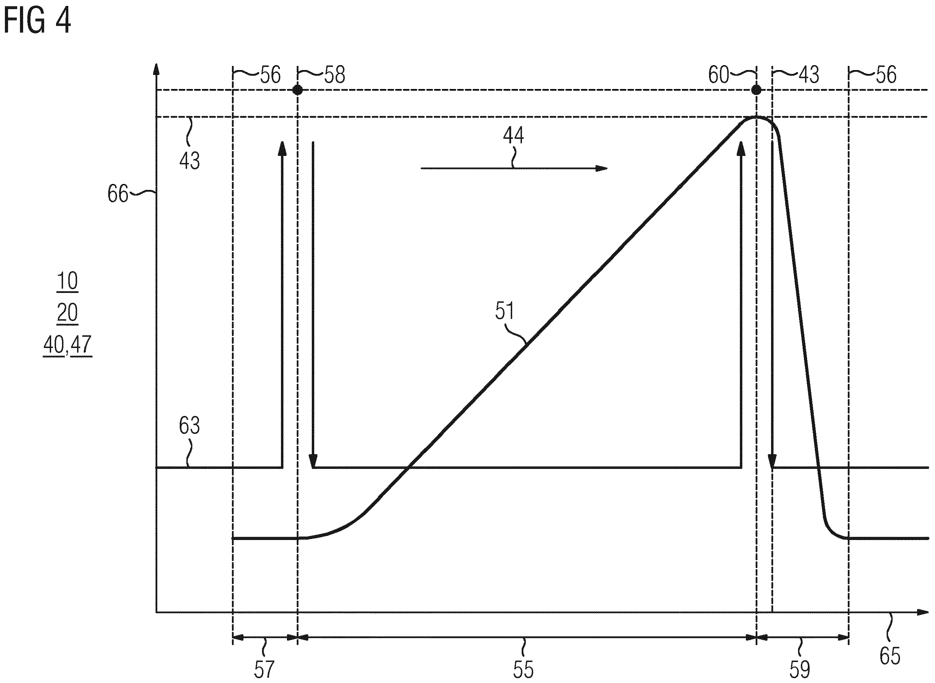

In FIG 4 ist ein Diagramm einer Drehung eines Exzenterelements 40, wie beispielsweise in FIG 3 abgebildet, abgebildet. Die horizontale Diagrammachse ist eine Winkelachse 65, die anzeigt, an welcher Stelle auf der Randkontur 47 der mechanische Kontakt mit dem ersten Betätigungsmittel 20 der Parkbremse 10 vorliegt. An der vertikalen Achse sind die radiale Höhe der Randkontur 47 und der Signalstatus eines Meldesignals 63 dargestellt. Die Kennlinie 51 bildet somit den am mechanischen Kontakt zwischen dem ersten Betätigungsmittel 10 und dem Exzenterelement 40 vorliegenden Randkonturradius 51 ab. Die Drehung des Exzenterelements 40 erfolgt in die bestimmungsgemäße Drehrichtung 44. Im Bereich der Entriegelungsposition 56 weist der Randkonturradius 51 ein Minimum auf, das bis zum Ende des Leerlaufwinkels 57 im Wesentlichen konstant bleibt. Ebenso verbleibt das Meldesignal 63 auf einem binären LOW-Zustand. Beim Passieren des Verriegelungsbeginns 58, als des Endes des Bereichs des Leerlaufwinkels 57, nimmt das Meldesignal 63 kurzfristig einen binären HIGH-Zustand ein. Dieser Zustandswechsel wird durch Schalter 78 an eine Steuereinheit 90 der Parkbremse 10 gemeldet. Ein solches Melden erlaubt eine automatische Positionsbestimmung für das Antriebsmittel der Parkbremse 10, beispielsweise nach einem Ausfall eines Software-Moduls. An den Leerlaufwinkel 57 schließt sich der Verriegelungswinkel 55 an, in dem der Randkonturradius 51 im Wesentlichen linear ansteigt. Im Bereich der Verriegelungsposition 60 nimmt das Meldesignal 63 kurzfristig einen binären HIGH-Zustand ein und meldet somit ein Erreichen der Verriegelungsposition 60. An den Verriegelungswinkel 55 schließt sich der Entriegelungswinkel 59 an, in dem der Randkonturradius 51 auf sein Minimum zurückgeht. Der Entriegelungwinkel 59 liegt dabei zwischen der Verriegelungsposition 60 und der Entriegelungsposition 56. Innerhalb des Entriegelungswinkels 59 liegt auch das Maximum 43 des Randkonturradius 51.

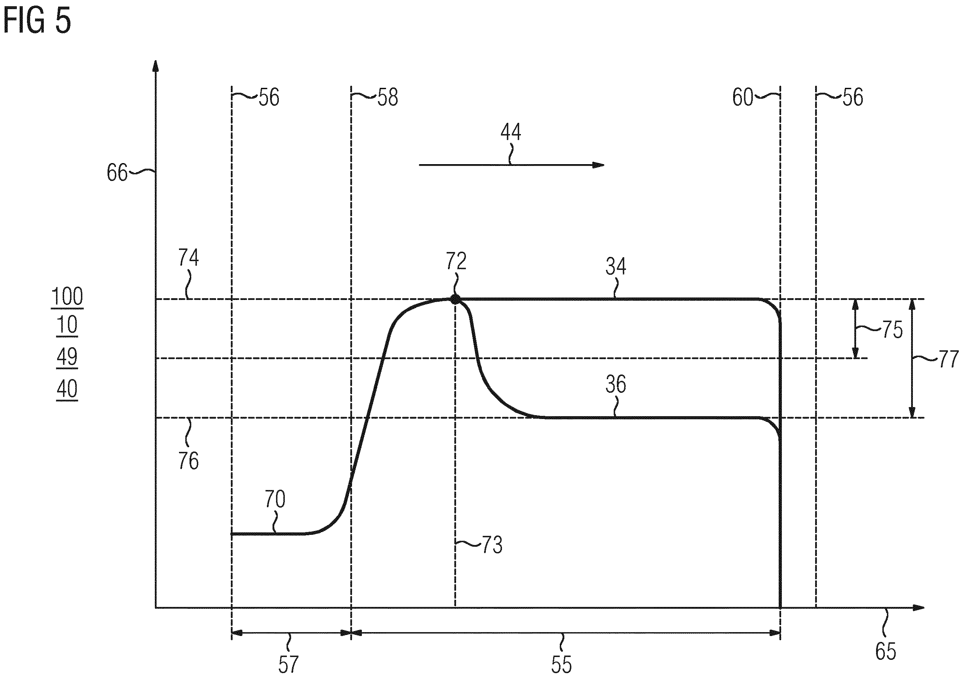

FIG 5 zeigt ein Winkel-Stromaufnahme-Diagramm eines Antriebsmittels 49 eines Exzenterelements 40 bei einer Betätigung gemäß dem erfindungsgemäßen Betriebsverfahren 100. Im Einzelnen werden zwei unterschiedliche mögliche Verläufe gezeigt. Die horizontale Achse in FIG 5 bildet die Winkelachse 65, die die Winkellage des nicht näher gezeigten mechanischen Kontakts zwischen dem Exzenterelement 40 und dem ersten Betätigungsmittel 20 zeigt. An der vertikalen Achse ist die Höhe der Stromaufnahme 70 des Antriebsmittels 49 dargestellt, das das Exzenterelement 40 in die bestimmungsgemäße Drehrichtung 44 dreht. Im Bereich des Leerlaufwinkels 57, also zwischen der Entriegelungsposition 56 und dem Verriegelungsbeginn 58, ist nur ein Minimum an Antriebsleistung erforderlich, so dass die Stromaufnahme 70 im Wesentlichen konstant ist. Ab dem Verriegelungsbeginn 58 steigt die Stromaufnahme 70 an und verbleibt zunächst auf einem Bezugsniveau 74. Dabei wird das erste Betätigungsmittel 20 vom Verriegelungsbeginn 58 bis zum Verzweigungspunkt 72 zusammengedrückt. Im Verriegelungswinkel 55 tritt ein Verzweigungspunkt 72 auf, von dem zwei unterschiedliche mögliche Verläufe der Stromaufnahme 70 ausgehen. Für den Fall, dass eine Oppositionsstellung 34 zwischen dem Arretierungsmittel 14 und dem erstem Betätigungsmittel 20 vorliegt, verbleibt die Stromaufnahme 70 auf dem Bezugsniveau 74. Dabei wird das erste Betätigungsmittel 20 weiter zusammengedrückt und die Rückstellkraft auf das Arretierungsmittel 14 erhöht. Das Exzenterelement 40 wird bis zum Erreichen der Verriegelungsposition 60 gedreht, in der die Energiezufuhr zum Antriebsmittel 49 unterbrochen wird. Infolgedessen fällt sie Stromaufnahme 70 auf Null ab.

Alternativ liegt ab dem Verzweigungspunkt 72 eine Lückenstellung 36 vor. Mit Eintritt der Lückenstellung 36 entspannt sich das erste Betätigungsmittel 20 zumindest teilweise. Dadurch wird die vom ersten Betätigungsmittel 20 auf das Exzenterelement 40 ausgeübte Rückstellkraft verringert, so dass die zum weiteren Drehen des Exzenterelements 40 erforderliche Leistung absinkt. Entsprechend geht die Stromaufnahme 70 nach dem Eintreten der Lückenstellung 36 zurück. Für die weitere Bewegung zur Verriegelungsposition 60 verbleibt die Stromaufnahme 70 auf einem niedrigeren Vergleichsniveau 76 als bei einer andauernden Oppositionsstellung 34. Die Differenz 77 zwischen dem Bezugsniveau 74 und dem Vergleichsniveau 76 ist betragsmäßig höher als ein einstellbarer Schwellenwert 75. Der Schwellenwert 77 ist durch eine entsprechende Eingabe in einem Programm, das die erfindungsgemäße Parkbremse 10 ansteuert, einstellbar. Der Übergang von der Oppositionsstellung 34 zur Lückenstellung 36 kann beim Passieren des Verzweigungspunktes 72 in der Parkbremse 10 folglich mit einer wählbaren Empfindlichkeit erfasst werden.

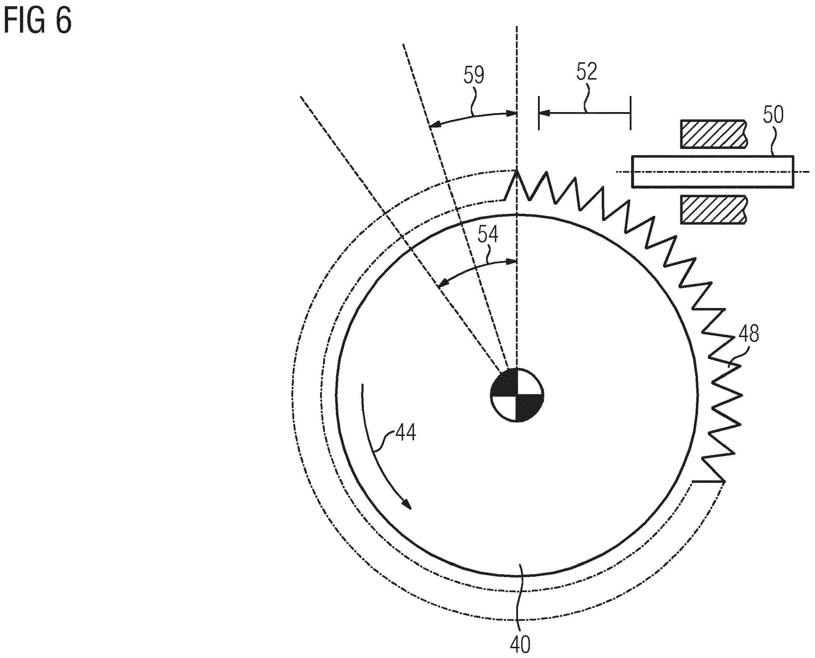

FIG 6 zeigt eine Detailansicht einer Ausführungsform eines Exzenterelements 40, das in einer Parkbremse gemäß FIG 1 und 2 einsetzbar ist. Das Exzenterelement 40 ist mit einer Verzahnung 48 versehen, mit der das Exzenterelement 40 in die bestimmungsgemäße Drehrichtung 44 drehbar ist. Ferner ist ein zweites Betätigungsmittel 50 benachbart zum Exzenterelement 40 angeordnet. Das zweite Betätigungsmittel 50 ist als Magnetbolzen ausgebildet, der dazu ausgebildet ist, einen axialen Hub 52 durchzuführen. Das zweite Betätigungsmittel 50 zu einem Eingreifen in die Verzahnung 48 des Exzenterelements 40 dimensioniert und platziert. Durch ein Anschlagen des zweiten Betätigungsmittels 50 an der Verzahnung 48 wird das Exzenterelement 40 weiter gedreht. Die vom axialen Hub 52 des zweiten Betätigungsmittels 50 auslösbare Drehung des Exzenterelements 54 hat als Größe einen definierten konstanten Betätigungswinkel 54. Der Betätigungswinkel 54 übersteigt den Entriegelungswinkel 59, der in Drehrichtung 44 zwischen der Verriegelungsposition 60 und der Entriegelungsposition 56 des Exzenterelements 40 liegt. Das zweite Betätigungsmittel 50 ist hierdurch stets dazu in der Lage, die Parkbremse 10 zu entriegeln. Durch das zweite Betätigungsmittel 50 wird das Prinzip der redundanten Betätigung in der Parkbremse 10 umgesetzt und somit die Zuverlässigkeit der Parkbremse 10 gesteigert.

### Bezugszeichenliste

- 10: Parkbremse
- 12: Parkbremsenrad
- 14: Arretierungsmittel
- 15: Klinkenzahn
- 16: Schwenklager
- 17: Zahn Parkbremsenrad
- 18: Öffnungsfeder
- 20: Erstes Betätigungselement
- 22: Federelement
- 24: Erstes Stößelelement
- 26: Zweites Stößelelement
- 28: Stößelführung
- 30: Axialrichtung
- 32: Dämpfer
- 34: Oppositionsstellung
- 36: Lückenstellung
- 37: Öffnungsrichtung
- 38: Schließrichtung
- 40: Exzenterelement
- 41: Randkontur
- 42: Exzenterlager
- 43: Maximal-Radius
- 44: Bestimmungsgemäße Drehrichtung
- 45: Kontaktumlaufrichtung
- 46: Wälzlager
- 47: Freilauf
- 48: Ratschenverzahnung
- 49: Antriebsmittel
- 50: Zweites Betätigungselement
- 51: Randkonturradius
- 52: Betätigungshub
- 53: Leerlaufbereich
- 54: Betätigungswinkel
- 55: Verriegelungswinkel
- 56: Entriegelungsposition
- 57: Leerlaufwinkel
- 58: Verriegelungsposition
- 59: Entriegelungswinkel
- 60: Verriegelungsposition
- 63: Positionssignal
- 65: Winkelachse
- 66: Konturachse
- 70: Stromaufnahme
- 72: Verzweigungspunkt
- 73: Winkellage Verzweigung
- 74: Bezugsniveau
- 75: Schwellenwert
- 77: Differenz
- 78: Schalter
- 79: Messvorrichtung
- 80: Programm
- 90: Steuereinheit

## Patentansprüche

1. Parkbremse (10) für ein Kraftfahrzeug, umfassend ein schwenkbares Arretierungsmittel (14) zur Ausübung einer Haltekraft auf ein Parkbremsenrad (12), wobei das Arretierungsmittel (14) mittels eines axial beweglichen ersten Betätigungsmittels (20) im Parkbremsenrad (12) einrastbar ist, wobei das erste Betätigungsmittel (20) als Federstößel ausgebildet ist, wobei das erste Betätigungsmittel (20) mittels eines Exzenterelements (40) axial bewegbar ist,
**dadurch gekennzeichnet,**
**dass** das Exzenterelement (40) nur in eine Drehrichtung (44) drehbar ausgebildet ist.

2. Parkbremse (10) nach Anspruch 1, **dadurch gekennzeichnet, dass** das erste Betätigungsmittel (20) zur Verzögerung einer Rückstellbewegung mit einem Dämpfer (32) ausgestattet ist.

3. Parkbremse (10) nach Anspruch 1 oder 2, **dadurch gekennzeichnet, dass** das Betätigungsmittel (20) an einem dem Exzenterelement (40) zugewandten Ende eine Abrundung oder ein Gleit- oder Wälzlager (46) zur Verringerung einer Reibung mit dem Exzenterelement (40) aufweist.

4. Parkbremse (10) nach einem der vorhergehenden Ansprüche, **dadurch gekennzeichnet, dass** der Federstößel ein erstes Stößelelement (24) umfasst, in das mindestens ein in Axialrichtung (30) elastisch gelagertes zweites Stößelelement (26) aufgenommen ist.

5. Parkbremse (10) nach einem der vorhergehenden Ansprüche, **dadurch gekennzeichnet, dass** ein Antriebsmittel (49) des Exzenterelements mit einer Messvorrichtung (79) gekoppelt ist, die dazu ausgebildet ist, eine Stromaufnahme (70) des Antriebsmittels (49) zu erfassen.

6. Parkbremse (10) nach einem der vorhergehenden Ansprüche, **dadurch gekennzeichnet, dass** die Parkbremse (10) ein zweites axiale bewegliches Betätigungsmittel (50) aufweist, das dazu ausgebildet ist, zum Drehen des Exzenterelements (40) in eine Verzahnung (48) am Exzenterelement (40) einzugreifen.

7. Betriebsverfahren für eine Parkbremse (10) mit einem Parkbremsenrad (12), einem darin einrastbaren schwenkbaren Arretierungsmittel (14) und einem axial beweglichen ersten Betätigungsmittel (20), das als Federstößel ausgebildet ist, umfassend die Schritte:
a) Bereitstellen der Parkbremse (10) in einem geöffneten Zustand;
b) Bewegen des Arretierungsmittels (14) in eine Verriegelungsrichtung mittels des Betätigungsmittels, wobei das Arretierungsmittel (14) durch ein Exzenterelement (40) betätigt wird, das in eine gleichbleibende Drehrichtung (44) gedreht wird;
c) Zusammendrücken des ersten Betätigungsmittels (20), wenn zwischen dem Parkbremsenrad (12) und dem Arretierungsmittel (14) eine Oppositionsstellung (34) vorliegt;
d) Elastisches Rückstellen des ersten Betätigungsmittels (20), wenn zwischen dem Parkbremsenrad (12) und dem Arretierungsmittel (14) eine Lückenstellung (36) vorliegt.

8. Betriebsverfahren nach Anspruch 7, **dadurch gekennzeichnet, dass** in einem Schritt e) die Parkbremse (10) gelöst wird, indem das Exzenterelement (40) weiter gedreht wird.

9. Betriebsverfahren nach Anspruch 7 oder 8, **dadurch gekennzeichnet, dass** während des Schritts c) ein Eintreten einer Lückenstellung (36) wischen dem Arretierungsmittel (14) und dem Parkbremsenrad (12) erfasst wird, wenn eine Stromaufnahme (70) eines Antriebsmittels (49) des Exzenterelements (40) mindestens um einen einstellbaren Schwellenwert (75) sinkt.

10. Programm (80) zur Steuerung einer Parkbremse (10), das auf einer Steuereinheit (90) in einem Kraftfahrzeug abspeicherbar und ausführbar ist, **dadurch gekennzeichnet, dass** das Programm (80) zur Durchführung mindestens eines Betriebsverfahrens nach einem der Ansprüche 7 bis 9 ausgebildet ist.

11. Steuereinheit (90) für eine Parkbremse (10), umfassend einen Speicher und eine Recheneinheit zur Speicherung und Ausführung eines Programms (80), **dadurch gekennzeichnet, dass** das Programm (80) nach Anspruch 10 ausgebildet ist.

## Claims

1. A parking brake (10) for a motor vehicle, comprising a pivotable locking mechanism (14) for exerting a holding force on a parking brake gear (12), wherein the locking mechanism (14) can be locked into the parking brake gear (12) by means of an axially movable first actuation unit (20), wherein the first actuation unit (20) is designed as a spring-mounted cam follower, wherein the first actuation unit (20) is axially movable by means of a cam element (40),
**characterised in that**
the cam element (40) is formed rotatably in just one direction of rotation (44).

2. The parking brake (10) according to claim 1, **characterised in that** the first actuation unit (20) is equipped with a damper (32) to delay a restoring movement.

3. The parking brake (10) according to claim 1 or 2, **characterised in that** the actuation unit (20), at an end facing the cam element (40), has a rounded portion or a plain bearing or rolling bearing (46) for reducing friction with the cam element (40).

4. The parking brake (10) according to any one of the preceding claims, **characterised in that** the spring-mounted cam follower comprises a first follower element (24), in which at least one second follower element (26) mounted elastically in the axial direction (30) is received.

5. The parking brake (10) according to any one of the preceding claims, **characterised in that** a drive means (49) of the cam element is coupled to a measuring device (79) which is designed to detect a current consumption (70) of the drive means (49).

6. The parking brake (10) according to any one of the preceding claims, **characterised in that** the parking brake (10) comprises a second axially movable actuation unit (50), which is designed to engage in a toothing (48) on the cam element (40) to rotate the cam element (40).

7. An operating method for a parking brake (10) with a parking brake gear (12), a pivotable locking mechanism (14) that can lock thereinto, and an axially movable first actuation unit (20), which is designed as a spring-mounted cam follower, said method comprising the following steps:
a) providing the parking brake (10) in an open state;
b) moving the locking mechanism (14) in a locking direction by means of the actuation unit, wherein the locking mechanism (14) is actuated by a cam element (40), which is rotated in a constant direction of rotation (44);
c) compressing the first actuation unit (20) when an opposition position (34) is present between the parking brake gear (12) and the locking mechanism (14);
d) elastically returning the first actuation unit (20) when a gap position (36) is present between the parking brake gear (12) and the locking mechanism (14).

8. The operating method according to claim 7, **characterised in that** in step e) the parking brake (10) is released by further rotating the cam element (40).

9. The operating method according to claim 7 or 8, **characterised in that** during step c) the fact that a gap position (36) between the locking mechanism (14) and the parking brake gear (12) has been entered is detected when a current consumption (70) of a drive means (49) of the cam element (40) drops at least by an adjustable threshold value (75).

10. A program (80) for controlling a parking brake (10) which can be stored and executed on a control unit (90) in a motor vehicle, **characterised in that** the program (80) is designed to carry out at least one operating method according to any one of claims 7 to 9.

11. A control unit (90) for a parking brake (10), comprising a store and a computing unit for storing and executing a program (80), **characterised in that** the program (80) is designed according to claim 13.

## Revendications

1. Frein de stationnement (10) pour un véhicule automobile, comprenant un moyen de blocage (14) pivotant servant à exercer une force de retenue sur une roue de frein de stationnement (12), en ce que le moyen de blocage (14) peut être encliqueté dans la roue de frein de stationnement (12) au moyen d'un premier moyen d'actionnement (20) mobile axialement, en ce que le premier moyen d'actionnement (20) est conçu sous la forme d'un poussoir à ressort, en ce que le premier moyen d'actionnement (20) peut être déplacé axialement au moyen d'un élément excentrique (40),
**caractérisé en ce que**
l'élément excentrique (40) est conçu de manière rotative uniquement dans un sens de rotation (44).

2. Frein de stationnement (10) selon la revendication 1, **caractérisé en ce que** le premier moyen d'actionnement (20) est équipé d'un amortisseur (32) pour la temporisation d'un mouvement de rappel.

3. Frein de stationnement (10) selon la revendication 1 ou 2, **caractérisé en ce que** le moyen d'actionnement (20) comporte au niveau d'une extrémité tournée vers l'élément excentrique (40) un arrondi ou un palier lisse ou à roulement (46) pour la réduction d'un frottement avec l'élément excentrique (40).

4. Frein de stationnement (10) selon l'une des revendications précédentes, **caractérisé en ce que** le poussoir à ressort comporte un premier élément poussoir (24) dans lequel au moins le deuxième élément poussoir (26) monté élastiquement dans le sens axial (30) est logé.

5. Frein de stationnement (10) selon l'une des revendications précédentes, **caractérisé en ce qu'**un moyen d'entraînement (49) de l'élément excentrique est couplé à un dispositif de mesure (79) qui est conçu pour mesurer une consommation de courant (70) du moyen d'entraînement (49).

6. Frein de stationnement (10) selon l'une des revendications précédentes, **caractérisé en ce que** le frein de stationnement (10) comporte un deuxième moyen d'actionnement (50) mobile axialement qui est conçu pour s'engrener pour la rotation de l'élément excentrique (40) dans une denture (48) au niveau de l'élément excentrique (40).

7. Procédé de fonctionnement d'un frein de stationnement (10) avec une roue de frein de stationnement (12), un moyen de blocage (14) pivotant qui peut y être encliqueté et un premier moyen d'actionnement (20) mobile axialement qui est conçu sous la forme d'un poussoir à ressort, comprenant les étapes consistant à :
a) mettre à disposition le frein de stationnement (10) dans un état ouvert ;
b) déplacer le moyen de blocage (14) dans un sens de verrouillage au moyen du moyen d'actionnement, en ce que le moyen de blocage (14) est actionné par un élément excentrique (40) qui est tourné dans un sens de rotation (44) constant ;
c) exercer une pression sur le premier moyen d'actionnement (20) lorsqu'une position d'opposition (34) entre la roue de frein de stationnement (12) et le moyen de blocage (14) est donnée ;
d) repositionner élastiquement le premier moyen d'actionnement (20) lorsqu'une position d'espace (36) entre la roue de frein de stationnement (12) et le moyen de blocage (14) est donnée.

8. Procédé de fonctionnement selon la revendication 7, **caractérisé en ce qu'**à l'étape e) le frein de stationnement (10) est desserré en continuant à tourner l'élément excentrique (40).

9. Procédé de fonctionnement selon la revendication 7 ou 8, **caractérisé en ce que** pendant l'étape c) une survenance d'une position d'espace (36) entre le moyen de blocage (14) et la roue de frein de stationnement (12) est mesurée lorsqu'une consommation de courant (70) d'un moyen d'entraînement (49) de l'élément excentrique (40) diminue au moins d'une valeur seuil réglable (75).

10. Programme (80) pour la commande d'un frein de stationnement (10) qui peut être enregistré et exécuté sur une unité de commande (90) dans un véhicule automobile, **caractérisé en ce que** le programme (80) est conçu pour la réalisation d'au moins un procédé de fonctionnement selon l'une des revendications 7 à 9.

11. Unité de commande (90) pour un frein de stationnement (10), comprenant une mémoire et une unité de calcul pour l'enregistrement et l'exécution d'un programme (80), **caractérisée en ce que** le programme (80) est réalisé selon la revendication 10.
